Europäisches Patentamt

European Patent Office

Office européen des brevets

(19)

(11) Veröffentlichungsnummer: **0 085 202**
**B1**

# EUROPÄISCHE PATENTSCHRIFT

(12)

(45) Veröffentlichungstag der Patentschrift:
27.08.86

(51) Int. Cl.⁴: **H 02 H 5/04**

(21) Anmeldenummer: **82201603.6**

(22) Anmeldetag: **14.12.82**

(54) Schutzschalter.

(30) Priorität: **30.01.82 DE 3203128**

(43) Veröffentlichungstag der Anmeldung:
**10.08.83 Patentblatt 83/32**

(45) Bekanntmachung des Hinweises auf die Patenterteilung:
**27.08.86 Patentblatt 86/35**

(84) Benannte Vertragsstaaten:
**AT BE CH DE FR GB IT LI NL SE**

(56) Entgegenhaltungen:
**DE - A - 1 763 311**
**FR - A - 2 312 131**
**GB - A - 1 445 711**
**GB - A - 2 075 777**

**Die Akte enthält technische Angaben, die nach dem Eingang der Anmeldung eingereicht wurden und die nicht in dieser Patentschrift enthalten sind.**

(73) Patentinhaber: **Braun Aktiengesellschaft, Rüsselsheimer Strasse 22, D-6000 Frankfurt/Main (DE)**

(72) Erfinder: **Kelterborn, Heinz, Am tiefen Born 8, D-6367 Karben 3 (DE)**
Erfinder: **Barowski, Karl-Heinz, Stettiner Strasse 58, D-6235 Okriftel (DE)**

(74) Vertreter: **Einsele, Rolf, Braun Aktiengesellschaft Postfach 1120 Frankfurter Strasse 145, D-6242 Kronberg Taunus (DE)**

## Beschreibung

Die Erfindung bezieht sich auf Schutzschaltungen zur Verhinderung der thermischen Überlastung der Wicklung eines Wechselstrom-Elektromotors gemäss den Oberbegriffen der Patentansprüche.

Bei motorisch angetriebenen elektrischen Haushaltsgeräten besteht z.B. die Gefahr einer Überhitzung der Wicklungen der Motoren, wenn die Geräte überlastet werden oder sogar blockiert sind. Schutzschalter unterbrechen in einem solchen Fall selbsttätig die Stromzufuhr des Gerätes, so dass einerseits das Gerät selbst, andererseits aber auch die Umgebung vor Schaden bewahrt wird.

In der Praxis sind bereits verschiedene Arten von Schutzschaltern bekannt geworden. Am einfachsten arbeiten Schmelzsicherungen, welche sich bei zu hohem Stromfluss so erhitzen, dass sie schmelzen und dadurch die Stromzufuhr unterbrechen. Nachteilig ist dabei, dass danach die Schmelzsicherung ausgewechselt werden muss. Vielfach ist es hierfür erforderlich, das jeweilige Gerät zu öffnen, was aus Sicherheitsgründen nur von Fachleuten durchgeführt werden sollte. Auch muss dann eine neue Schmelzsicherung zur Hand sein.

Es sind auch Temperaturbegrenzer bekannt, welche bei Überschreiten einer vorgegebenen Temperatur automatisch den Strom ausschalten und nach Abkühlung des Gerätes automatisch wieder einschalten. Solche Temperaturbegrenzer ersparen zwar den Aufwand des Austauschens von Schmelzsicherungen, in der Praxis wird jedoch im Störfall – d.h., wenn der Temperaturbegrenzer die Stromzufuhr wegen Überhitzung unterbrochen hat – leicht vergessen, das Gerät auch noch mittels des Netzschalters auszuschalten. Das Gerät schaltet dann nach einiger Zeit des Abkühlens automatisch wieder ein, wodurch – besonders bei Geräten mit sich bewegenden Teilen, wie Saftzentrifugen oder Mixern – für den Benutzer eine erhebliche Unfallgefahr besteht.

Diesen sicherheitstechnischen Mangel kann man durch Temperaturbegrenzer oder Überstromrelais ausschliessen, welche mit einer selbsttätigen Rückschaltsperre ausgestattet sind. Solche Einrichtungen erfordern jedoch einen zusätzlichen Bedienungsaufwand, nämlich ihre Rückstellung von Hand nach erfolgter Abschaltung und Abkühlung des Gerätes.

Es sind auch bereits Schutzschaltungen bekannt geworden, bei denen einerseits nach einem selbsttätigen Abschalten des geschützten Motors kein zusätzlicher Bedienungsaufwand erforderlich ist, um den Motor nach ausreichendem Abkühlen wieder in Betrieb nehmen zu können, andererseits jedoch ein erneutes, unbeabsichtigtes Anlaufen des Motors ausgeschlossen ist. Der Motor bleibt so lange abgeschaltet, bis die Motorwicklung vollständig abgekühlt ist und die Bedienperson den Netzschalter des Gerätes erneut einschaltet. Bekannte Schutzschaltungen dieser Art (FR-A-2 312 131, GB-A-1 445 711, DE-A-1 763 311) enthielten temperaturabhängige Widerstände, die als temperaturkritische Schaltungselemente sowohl das Abschalten des Motorstromes bei Überhitzung als auch die Verhinderung des unbeabsichtigten Wiederanlaufens des Motors bewirkten.

Die Aufgabe der Erfindung ist, die gattungsgemässen Motor-Schutzschaltungen mit Wiederanlaufsperre zu verbessern.

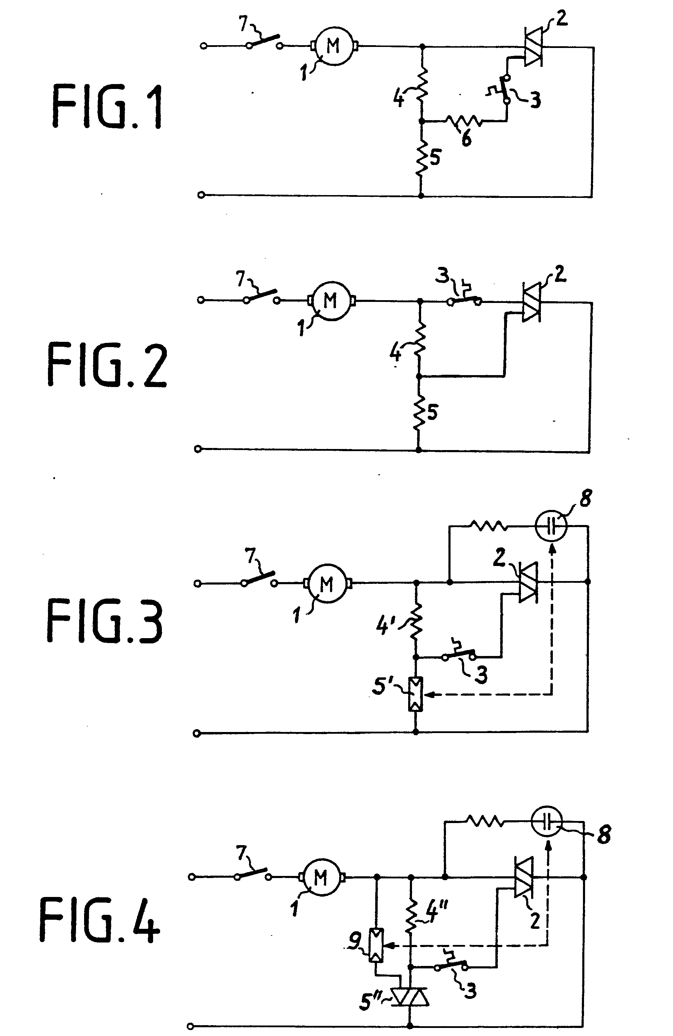

Diese Aufgabe wird durch die in den Patentansprüchen 1 bis 3 gekennzeichneten Schutzschaltungen gelöst, deren Schaltungsprinzip in den Figuren 1 bis 4 der Zeichnung beispielsweise dargestellt ist.

Den erfindungsgemässen Schutzschaltungen ist gemeinsam, dass in ihnen als temperaturkritisches Bauteil, das für die temperaturgenaue Abschaltung des Motorstromes verantwortlich ist, ein Thermoschalter eingesetzt und in sinnvoller Weise in eine Schaltung integriert ist, in der temperaturabhängige Widerstandselemente – wie z.B. die bekannten PTC-Widerstände – nur noch im Rahmen der Wiederanlaufsperre wirksam sind.

Vorteile von Schutzschaltungen, die nach der vorliegenden Erfindung aufgebaut sind, bestehen darin, dass diese eine von aussen her nicht beeinflussbare Funktionssicherheit aufweisen, dass keine Beeinflussung durch besondere Umgebungsverhältnisse wie Licht, Feuchtigkeit, Vibration oder Spannungsänderungen erfolgt, dass sie auf Lasterhöhungen nicht ansprechen, da sie nur temperaturabhängig arbeiten, und dass nach ihrem Ansprechen ein Wiedereinschalten des Gerätes nur über dessen Netzschalter möglich ist.

Insbesondere bei Haushaltsgeräten, deren Werkzeugwellen für unterschiedliche Gebrauchszwecke mit dafür besonders angepassten Drehzahlen arbeiten müssen, hat sich die Phasenanschnittsteuerung allgemein durchgesetzt. Da eine derartige Motorregelung oder Motorsteuerung normalerweise einen Triac benötigt, besteht ein besonderer Vorteil der Schutzschaltung nach der vorliegenden Erfindung darin, dass nur wenige preiswerte elektrische Bauteile den ohnehin notwendigen elektrischen Bauteilen hinzuzufügen sind, um zu den erforderlichen Schutzmassnahmen zu gelangen.

Die Zeichnung zeigt verschiedene Ausführungsmöglichkeiten der Erfindung, die sämtlich die in bekannter Weise aufgebaute Phasenanschnittsteuerung mit einem Triac für die Stromversorgung des Elektromotors – beispielsweise einer Küchenmaschine – enthalten.

In der Ausführungsform nach Figur 1 wird der Triac 2, dessen Gate über einen Thermoschalter 3 und einen Vorwiderstand 6 an den aus einem PTC-Element 4 und einem Widerstand 5 bestehenden Spannungsteiler angeschlossen ist, durch Schliessen des Netzschalters 7 gezündet, wodurch der Elektromotor 1 eingeschaltet wird.

Sobald der am Motor 1 angeordnete Thermoschalter 3 seine Abschalttemperatur erreicht, unterbricht er den Gate-Strom, so dass der Triac 2 sperrt und den Motor 1 ausschaltet. Hierdurch liegt im gleichen Moment die gesamte Netzspannung über dem Spannungsteiler 4, 5, so dass das PTC-Element 4 von einem erhöhten Strom durchflossen wird, der es erwärmt und hochohmig werden lässt. Dies hat zur Folge, dass auch nach Abkühlung der Motorwicklung und Wiedereinschalten des Thermoschalters 3 der Triac 2 gesperrt bleibt, da durch Veränderung des Verhältnisses der Widerstandswerte die Gate-Spannung zur Zündung des Triacs 2 nicht ausreicht.

Nur wenn die am Spannungsteiler 4, 5 liegende Netzspannung durch Öffnen des Schalters 7 unterbrochen wird, kann das PTC-Element 4 abkühlen und in seinen niederohmigen Grundzustand zurückfallen, und erst dann kann das Gerät von neuem eingeschaltet und benutzt werden.

In entsprechender Weise wird auch beim Ausführungsbeispiel nach Fig. 2 der Motor 1 durch Ansprechen des an der Motorwicklung angeordneten Thermoschalters 3 vor Überhitzung geschützt. Diese Schaltung hat den zusätzlichen Vorteil, dass sie ihre Funktion als Überhitzungsschutz auch dann erfüllt, wenn im Triac 2 ein Kurzschluss aufgetreten ist.

Bei der Ausführungsform nach Fig. 3 wird das Wiedereinschalten des Motors 1 durch Verwendung einer Glimmlampe 8 in Verbindung mit einem Photowiderstand 5' verhindert.

Der Motor 1 und der Triac 2 sind wie üblich in Reihe geschaltet, und der Thermoschalter 3 ist in der Gate-Zuleitung angeordnet. Das Öffnen des Thermoschalters 3 bei seiner Nenntemperatur bewirkt, dass der Triac 2 sperrt, wodurch die bis dahin durch den Triac 2 kurzgeschlossene Lampe 8 aufleuchtet und den Photowiderstand 5' bestrahlt, der damit niederohmig wird. Hierdurch verschiebt sich das Potential des Gate-Anschlusses am Spannungsteiler 4', 5', so dass die Gate-Spannung – nachdem der Thermoschalter abgekühlt ist und seine Kontakte wieder geschlossen sind – zum Zünden des Triacs 2 nicht ausreicht, ehe nicht der Netzschalter 7 geöffnet wird und somit der Photowiderstand 5' durch Erlöschen der Lampe 8 wieder hochohmig geworden ist.

Bei der Ausführungsform nach Fig. 4 wird das unbeabsichtigte Wiedereinschalten des Motors 1 ebenfalls unter Zuhilfenahme einer Glimmlampe 8 und eines Photowiderstands 9 in Verbindung mit einem zweiten Triac 5'' erreicht. Wiederum sind der Motor 1 und der erste Triac 2 in Reihe geschaltet, wobei ein Thermoschalter 3 in dessen Gate-Zuleitung angeordnet ist und ihn sperrt, wenn er seine Nenntemperatur erreicht, wodurch die Lampe 8 aufleuchtet und den Photowiderstand 9 bestrahlt und niederohmig werden lässt. Dieser liegt in der Gate-Zuleitung des zweiten Triacs 5'' und bewirkt dann dessen Zündung.

Dies hat wiederum zur Folge, dass sich das Potential des Gate-Anschlusses des ersten Triacs 2 am Spannungsteiler 4'', 5'' so verschiebt, dass nach Abkühlung und Schliessen des Thermoschalters 3 am Triac 2 keine zur Zündung ausreichende Gate-Spannung zur Verfügung steht. Auch in dieser Schaltung muss also der Netzschalter 7 geöffnet werden, bevor der Motor 1 wieder anlaufen kann.

## Patentansprüche

1. Schutzschaltung zur Verhinderung der thermischen Überlastung der Wicklung eines Wechselstrom-Elektromotors (1) mit einem zu der Motorwicklung in Reihe geschalteten, den Motorstromkreis bei unzulässiger Erwärmung der Motorwicklung unterbrechenden Triac (2), zu dem die Reihenschaltung eines PTC-Widerstandes (4) und eines Vorwiderstandes (5) parallelgeschaltet und dessen Gate an der Verbindung dieser beiden Widerstände (4, 5) angeschlossen ist, wobei der PTC-Widerstand (4) bei infolge unzulässiger Erwärmung abgeschaltetem Motor einen stark veränderten Widerstandswert aufweist, durch den das Verhältnis der Spannungsteilung an diesen Widerständen (4, 5) dann so verschoben ist, dass die zwischen den Widerständen (4, 5) abgegriffene Gate-Spannung zum Zünden des Triacs (2) nicht ausreicht, dadurch gekennzeichnet, dass in die Gate-Zuleitung des Triacs (2) oder in den Motor(1)-Triac(2)-Stromkreis zwischen dem Triac (2) und der Reihenschaltung der Widerstände (4, 5) ein durch die Motorwicklung erwärmbarer Thermoschalter (3) eingefügt ist, der seinen Schaltkontakt öffnet, wenn die Temperatur der Motorwicklung ihren maximal zulässigen Wert überschreitet.

2. Schutzschaltung zur Verhinderung der thermischen Überlastung der Wicklung eines Wechselstrom-Elektromotors (1) mit einem zu der Motorwicklung in Reihe geschalteten, den Motorstromkreis bei unzulässiger Erwärmung der Motorwicklung unterbrechenden Triac (2), zu dem die Reihenschaltung zweier Widerstandselemente parallelgeschaltet und dessen Gate an der Verbindung dieser beiden Widerstände (4', 5') angeschlossen ist, wobei mindestens einer (5') dieser Widerstände bei infolge unzulässiger Erwärmung abgeschaltetem Motor einen stark veränderten Widerstandswert aufweist, durch den das Verhältnis der Spannungsteilung an diesen Widerständen (4', 5') dann so verschoben ist, dass die zwischen den Widerständen (4', 5') abgegriffene Gate-Spannung zum Zünden des Triacs (2) nicht ausreicht, dadurch gekennzeichnet, dass die zum Triac (2) parallelgeschaltete Reihenschaltung der Widerstandselemente einen von einer zum Triac (2) parallelgeschalteten Glimmlampe (8) beleuchtbaren Photowiderstand (5') sowie einen Vorwiderstand (4') aufweist und dass in die Gate-Zuleitung des Triacs (2) ein durch die Motorwicklung erwärmbarer Thermoschalter (3) eingefügt ist, der seinen Schaltkontakt öffnet, wenn die Temperatur der Motorwicklung ihren maximal zulässigen Wert überschreitet.

3. Schutzschaltung zur Verhinderung der thermischen Überlastung der Wicklung eines Wechselstrom-Elektromotors (1) mit einem zu der Motorwicklung in Reihe geschalteten, den Motorstromkreis bei unzulässiger Erwärmung der Motorwicklung unterbrechenden Triac (2), zu dem die Reihenschaltung zweier Widerstandselemente (4'', 5'') parallelgeschaltet und dessen Gate an der Verbindung dieser beiden Widerstände (4'', 5'')

angeschlossen ist, wobei mindestens einer (5'') dieser Widerstände bei infolge unzulässiger Erwärmung abgeschaltetem Motor einen stark veränderten Widerstandswert aufweist, durch den das Verhältnis der Spannungsteilung an diesen Widerständen (4'', 5'') dann so verschoben ist, dass die zwischen den Widerständen (4'', 5'') abgegriffene Gate-Spannung zum Zünden des Triacs (2) nicht ausreicht, dadurch gekennzeichnet, dass die zum Triac (2) parallelgeschaltete Reihenschaltung der Widerstandselemente einen Hilfs-Triac (5'') sowie einen Vorwiderstand (4'') aufweist, wobei in der Gate-Zuleitung des Hilfs-Triac (5'') ein von einer zum Triac (2) parallelgeschalteten Glimmlampe (8) beleuchtbarer Photowiderstand (9) angeordnet ist, und dass in die Gate-Zuleitung des Triacs (2) ein durch die Motorwicklung erwärmbarer Thermoschalter (3) eingefügt ist, der seinen Schaltkontakt öffnet, wenn die Temperatur der Motorwicklung ihren maximal zulässigen Wert überschreitet.

**Claims**

1. A protective circuit to prevent the thermal overloading of the winding of an alternating-current electric motor (1) having a triac (2) which is connected in series with the motor winding and interrupts the motor circuit in the event of inadmissible heating of the motor winding, and connected in parallel with which is the series connection of a PTC resistor (4) and of a dropping resistor (5) and the gate of which is connected to the junction of these two resistors (4, 5), and, when the motor is switched off as a result of inadmissible heating, the PTC resistor (4) has a greatly altered resistance value as a result of which the ratio of the voltage division at these resistors (4, 5) is then shifted so that the gate voltage tapped off between the resistors (4, 5) is no longer sufficient to fire the triac (2), characterised in that introduced into the gate feed line of the triac (2) or into the motor(1)-triac(2) circuit between the triac (2) and the series connection of the resistors (4, 5) is a thermal circuit-breaker (3) which can be heated by the motor winding and opens its breaker contact if the temperature of the motor winding exceeds its maximum permissible value.

2. A protective circuit to prevent the thermal overloading of the winding of an alternating-current electric motor (1) having a triac (2) which is connected in series with the motor winding and interrupts the motor circuit in the event of inadmissible heating of the motor winding and connected in parallel with which is the series connection of two resistance elements and the gate of which is connected to the junction of these two resistors (4', 5'), and, when the motor is switched off as a result of inadmissible heating, at least one (5') of these resistors has a greatly altered resistance value as a result of which the ratio of the voltage division at these resistors (4', 5') is then shifted so that the gate voltage tapped off between the resistors (4', 5') is not sufficient to fire the triac (2), characterised in that the series connection of the resistance elements connected in parallel with the triac (2) comprises a photoresistor (5') which can be illuminated by a glow lamp (8) connected in parallel with the triac (2), as well as a dropping resistor (4'), and that introduced into the gate feed line of the triac (2) is a thermal circuit breaker (3) which can be heated by the motor winding and which opens its breaker contact if the temperature of the motor winding exceeds its maximum permissible value.

3. A protective circuit to prevent the thermal overloading of the winding of an alternating-current electric motor (1) having a triac (2) which is connected in series with the motor winding and interrupts the motor circuit in the event of inadmissible heating of the motor winding and connected in parallel with which is the series connection of two resistance elements (4'', 5'') and the gate of which is connected to the junction of these two resistors (4'', 5''), and, when the motor is switched off as a result of inadmissible heating, at least one (5'') of these resistors has a greatly altered resistance value as a result of which the ratio of the voltage division at these resistors (4'', 5'') is then shifted so that the gate voltage tapped off between the resistors (4'', 5'') is not sufficient to fire the triac (2), characterised in that the series connection of the resistance elements connected in parallel to the triac (2) comprises an auxiliary triac (5'') and a dropping resistor (4''), and a photoresistor (9), which can be illuminated by a glow lamp (8) connected in parallel with the triac (2), is disposed in the gate feed line of the auxiliary triac (5''), and that introduced into the gate feed line of the triac (2) is a thermal circuit breaker (3) which can be heated by the motor winding and which opens its breaker contact if the temperature of the motor winding exceeds its maximum permissible value.

**Revendications**

1. Circuit de protection pour interdire la surcharge thermique du bobinage d'un moteur électrique à courant alternatif (1) comportant un thyristor bidirectionnel triac (2) monté en série avec le bobinage du moteur, coupant le circuit d'alimentation du moteur en cas d'échauffement non autorisé du bobinage du moteur, parallèlement auquel est monté le circuit de série d'une résistance PTC (à commande de température positive) (4) et d'une prérésistance (5) et dont la gachette est reliée au point de liaison de ces deux résistances (4, 5), étant précisé que lorsque le moteur est mis hors circuit par suite d'un échauffement non autorisé, la résistance PTC (4) présente une valeur de résistance fortement modifièe par suite de laquelle le rapport de la division de tension à ces résistances (4, 5) est décalé de façon que la tension de gachette prélevée entre la résistance (4, 5) ne suffit pas pour allumer le triac (2), caractérisé en ce que dans le circuit d'alimentation de gachette du triac (2) ou dans le circuit moteur (1) – triac (2), entre le triac (2) et le circuit de série des résistances (4, 5) est introduit un interrupteur thermique (3) que le bobinage du moteur peut échauffer et qui ouvre son contact lorsque la température du bobinage du moteur dépasse sa valeur maximale autorisée.

2. Circuit de protection pour interdire le surcharge thermique du bobinage d'un moteur électrique à courant alternatif (1) comportant un thyristor bidirectionnel triac (2) monté en série avec le bobinage du moteur, coupant le circuit d'alimentation du moteur en cas d'échauffement non autorisé du bobinage du moteur, parallèlement auquel est monté le circuit de série de deux éléments de résistance et dont la gachette est reliée au point de liaison de ces deux résistances (4', 5'), étant précisé qu'au moins l'une (5') de ces résistances, dans le cas où le moteur est mis hors circuit par suite d'un échauffement non autorisé, présente une valeur de résistance fortement modifiée par laquelle le rapport de la division de tension à ces résistances (4', 5') est décalé de façon telle que la tension de gachette prélevée entre les résistances (4, 5') ne suffit pas pour l'allumage de triac (2), caractérisé en ce que le circuit de série des éléments de résistance monté en parallèle au triac (2) présente une résistance photo-électrique (5') qui peut irradier une lampe à lueur (8) montée en parallèle au triac (2), ainsi qu'une prérésistance (4'), et en ce que dans le circuit d'alimentation de gachette du triac (2) est monté à un interrupteur thermique (3) que le bobinage du moteur peut échauffer et qui ouvre son contact lorsque la température de bobinage du moteur dépasse sa valeur maximale autorisée.

3. Circuit de protection pour interdire la surcharge thermique du bobinage d'un moteur électrique à courant alternatif (1) comportant un thyristor bidirectionnel triac (2) monté en série avec le bobinage du moteur, coupant le circuit d'alimentation du moteur en cas d'échauffement non autorisé du bobinage du moteur, parallèlement auquel est monté le circuit de série de deux éléments de résistance (4'', 5'') et dont la gachette est reliée au point de liaison de ces deux résistances (4'', 5''), étant précisé qu'au moins l'une (5'') de ces résistances, dans le cas où le moteur est mis hors circuit par suite d'un échauffement non autorisé, présente une valeur de résistance fortement modifiée par laquelle le rapport de la division de tension à ces résistances (4'', 5'') est décalé de façon telle que la tension de gachette prélevée entre les résistances (4'', 5'') ne suffit pas pour l'allumage du triac (2), caractérisé en ce que le circuit de série des éléments de résistance monté en parallèle au triac (2) présente un triac auxiliaire (5'') ainsi qu'une prérésistance (4''), étant précisé que dans le circuit d'alimentation de gachette du triac auxiliaire (5'') est disposée une résistance photo-électrique (9) qui peut être irradiée par une lampe à lueur (8) montée en parallèle au triac (2); et en ce que dans le circuit d'alimentation de gachette du triac (2) est monté un interrupteur thermique (3) que le bobinage du moteur peut échauffer et qui ouvre son contact lorsque la température du bobinage du moteur dépasse sa valeur maximale autorisée.

FIG.1

FIG.2

FIG.3

FIG.4